# EUROPÄISCHE PATENTSCHRIFT

(11) **EP 1 366 112 B1**
(45) Veröffentlichungstag und Bekanntmachung des Hinweises auf die Patenterteilung: **21.07.2004**
(21) Anmeldenummer: 02735108.9
(22) Anmeldetag: 28.02.2002
(51) Int. Cl.: C08K 3/36, C01B 33/145

(54) **SILICIUMDIOXIDDISPERSION**
SILICON DIOXIDE DISPERSION
DISPERSION D'OXYDE DE SILICIUM

(30) Priorität: 28.02.2001 EP 01104919
(43) Veröffentlichungstag der Anmeldung: 03.12.2003
(73) Patentinhaber: hanse chemie AG, 21502 Geesthacht (DE)
(72) Erfinder: ADAM, Johannes, 01109 Dresden-Klotzsche (DE); ADEBAHR, Thorsten, 21037 Hamburg (DE); PYRLIK, Manfred, 21521 Wohltorf (DE); ROSCHER, Christof, 20537 Hamburg (DE); WIECZORRECK, Robert, 22885 Barsbüttel (DE); EGER, Christian, 21357 Bardowick (DE)
(74) Vertreter: Glawe, Delfs, Moll & Partner
(86) Internationale Anmeldenummer: PCT/EP2002/002198
(87) Internationale Veröffentlichungsnummer: WO 2002/083776

(56) Entgegenhaltungen:
- EP-A- 0 075 545
- EP-A- 0 460 560
- EP-A- 0 565 403
- DE-B- 1 295 746

## Beschreibung

Die Erfindung betrifft eine Siliciumdioxiddispersion, die enthält:
a) eine äußere fließfähige Phase, die enthält:
   a1) polymerisierbare Monomere, Oligomere und/oder Prepolymere, die durch nicht-radikalische Umsetzungen in Polymere überführbar sind; und/oder
   a2) Polymere,
b) eine disperse Phase, die amorphes Siliciumdioxid enthält.

Es ist bekannt, polymere Werkstoffe wie z.B. Polyurethane, Polyharnstoffe oder sogenannte Reaktionsharze mit Füllstoffen zu versehen, um bestimmte Eigenschaften des polymeren Werkstoffes zu modifizieren. Bspw. können auf diese Weise Schlagzähigkeit, Biegefestigkeit, Härte oder elektrisches Isolationsvermögen verbessert werden.

Es ist bereits bekannt, Kieselsäure bzw. Siliciumdioxid (SiO₂) als Füllstoff in Polymeren zu verwenden. Verschiedene Verfahren zur Herstellung von SiO₂-Füllstoffen sind aus offenkundiger Vorbenutzung bekannt.

Natürliches (mineralisches) SiO₂ kann bspw. durch Mahlen auf eine gewünschte Teilchengröße gebracht werden und mit dem Polymer oder einem Polymervorprodukt vermischt werden. Gemahlenes SiO₂ zeigt in der Regel eine sehr breite Teilchengrößeverteilung und unregelmäßige Teilchenstruktur. Teilchengrößen von unter 1 µm sind durch mechanische Zerkleinerung des SiO₂ nicht oder nur schwer erzielbar.

Es ist ferner bekannt, aus wäßrigen Alkalisilicatlösungen SiO₂ durch Ansäueren auszufällen und anschließend zu trocknen. Dieses gefällte SiO₂ wird mit dem Polymer oder einem Vorprodukt vermischt. Auch hier erhält man unregelmäßige Teilchenstrukturen mit sehr breiten Teilchengrößeverteilungen.

Eine weitere Möglichkeit ist die Herstellung pyrogener Kieselsäure durch Flammenhydrolyse von Siliciumhalogenverbindungen. Dabei entstehen Teilchen sehr komplexer Morphologie und extrem breiter Teilchengrößeverteilung, da sich die bei der Flammenhydrolyse entstehenden Primärteilchen teilweise agglomerieren und andere assoziierte Überstrukturen bilden. Pyrogene Kieselsäure ist zudem teuer in der Herstellung.

Weiterhin bekannt ist es, organofunktionelle Silane (insbesondere Alkoxysilane) zu hydrolysieren und kondensieren, dadurch wäßrige oder wäßrig-alkoholische Kieselsäuresole herzustellen und diese Sole mit einem Polymervorprodukt zu vermischen. Anschließend kann Wasser bzw. Alkohol aus der Mischung entfernt werden. Dieses Verfahren ist teuer und im großtechnischen Maßstab nur schwer kontrollierbar.

Die geschilderten Verfahren haben ferner den Nachteil, daß die gezielte Herstellung von SiO₂-Füllstoffen mit monomodaler, enger Teilchengrößeverteilung nicht möglich ist, dieser Nachteil ist bei den drei erstgenannten Verfahren besonders ausgeprägt. Dies führt dazu, daß Dispersionen des Füllstoffes in Polymervorprodukten bereits bei verhältnismäßig niedrigen Füllstoffkonzentrationen unerwünschte rheologische Eigenschaften, insbesondere eine hohe Viskosität, zeigen, die die Verarbeitbarkeit erschweren.

Der vorliegenden Erfindung liegt die Aufgabe zugrunde, eine Siliciumdioxiddispersion der eingangs genannten Art zu schaffen, die auch bei höheren Füllstoffkonzentrationen gut verarbeitbar ist, die eine gute mechanische und/oder elektrische Eigenschaftsverbesserung des Polymerendprodukts bewirkt und die nach einem ebenfalls erfindungsgemäßen Verfahren aus kostengünstig erhältlichen Ausgangsmaterialien herstellbar sind.

Die Siliciumdioxiddispersion enthält dementsprechend:
a) eine äußere fließfähige Phase, die enthält:
   a1) polymerisierbare Monomere, Oligomere und/oder Prepolymere, die durch nicht-radikalische Umsetzungen in Polymere überführbar sind; und/oder
   a2) Polymere,
b) eine disperse Phase, die amorphes Siliciumdioxid enthält,
und ist dadurch gekennzeichnet, daß die mittels Neutronenkleinwinkelstreuung (SANS) gemessene mittlere Teilchengröße dₘₐₓ des Siliciumdioxids zwischen 3 und 50 nm bei einer maximalen Halbwertsbreite der Verteilungskurve von 1,5 dₘₐₓ liegt, und daß die Dispersion Silane enthält.

Das erfindungsgemäße Verfahren zur Herstellung einer solchen Dispersion zeichnet sich durch folgende Schritte aus:
a) Vorlegen einer wäßrigen Silicatlösung,
b) Polykondensation des Silicats bis zu einer Teilchengröße von 3-50 nm,
c) Einstellen des erhaltenen Kieselsäuresols auf einen alkalischen pH-Wert,
d) optional Einengen des Sols,
e) Vermischen des Sols mit Bestandteilen der äußeren, fließfähigen Phase der Dispersion,
f) optional Entfernen von Wasser und/oder anderen Lösungsmittelbestandteilen aus der Dispersion.

Zunächst seien einige im Rahmen der Erfindung verwendete Begriffe erläutert:

Die sogenannte äußere Phase der erfindungsgemäßen Siliciumdioxiddispersion ist fließfähig. Dies bedeutet, daß sie bei üblichen Verarbeitungstemperaturen (bspw. 18 bis 300°C, bevorzugt 18 bis 100°C) entweder flüssig oder doch hinreichend fließfähig bzw. viskos ist, um der gewünschten Weiterverarbeitung, insbesondere der Mischung mit weiteren Bestandteilen des herzustellenden polymeren Werkstoffs oder der Formung im Rahmen der Verarbeitung, unterzogen zu werden.

Diese äußere Phase enthält gemäß einem Aspekt der Erfindung polymerisierbare Monomere, Oligomere und/oder Prepolymere. Prepolymere sind kleinere Polymereinheiten, die zu größeren Polymeren polyreagieren bzw. vernetzen können. "Polymerisierbar" bedeutet, daß in dieser äußeren Phase noch polymerisierbare und/oder vernetzbare Gruppen enthalten sind, die im Rahmen der Weiterverarbeitung der Dispersion eine Polymerisations- und/oder Vernetzungsreaktion eingehen können. Die äußere Phase enthält polymerisierbare Bestandteile, die durch nicht-radikalische Umsetzungen in Polymere überführbar sind. Dies bedeutet, daß die Polyreaktion zu Polymeren nicht über einen radikalischen Mechanismus verläuft. Bevorzugt sind statt dessen Polykondensationen (in Stufen unter Abspaltung von Nebenprodukten ablaufende Polyreaktion) oder Polyadditionen (in Stufen ohne Abspaltung von Nebenprodukten verlaufende Polyreaktionen).Ebenfalls Gegenstand der Erfindung sind anionische oder kationische polymerisierbare Bestandteile in der äußeren Phase. Nicht Gegenstand der Erfindung sind in jedem Fall Dispersionen mit äußeren Phasen, die polymerisierbare Acrylate oder Methacrylate als wesentlichen Bestandteil enthalten. Polymerisierbare Acrylate oder Methacrylate sind alle monomeren, oligomeren oder prepolymeren Acrylate oder Methacrylate, die bei der Herstellung eines Werkstoffs aus der Dispersion gezielt einer weiteren Polymerisation unterzogen werden. Als Beispiel für die Polyadditionen sei die Synthese von Polyurethanen aus Diolen und Isocyanaten genannt, als Beispiel für Polykondensationen die Reaktion von Dicarbonsäuren mit Diolen zu Polyestern.

Gemäß einem weiteren Aspekt der Erfindung kann die äußere fließfähige Phase ein Polymer oder mehrere Polymere enthalten. Polymere in diesem Sinne sind Makromoleküle, die nicht mehr reaktiv sind und daher nicht zu größeren Polymereinheiten reagieren. Insbesondere kann es sich um einen aufgeschmolzenen und/oder gelösten Werkstoff handeln, der durch Abkühlen und/oder Entfernen des Lösungsmittels wieder physikalisch in diesen Werkstoff überführbar ist. Bei dieser Variante der Erfindung härtet die erfindungsgemäße Dispersion also nicht chemisch zu einem Polymer aus, es wird vielmehr als äußere Phase bereits ein fertiges Polymer eingesetzt, das zwecks Herstellung der Dispersion lediglich physikalisch (thermisch und/oder durch Lösungsmittelzusatz) in einen flüssigen oder viskosen Aggregatzustand gebracht wird, um das Einmischen der dispersen Phase zu ermöglichen. Nach dem Herstellen der Dispersion kann durch Abkühlen bzw. Entfernen des Lösungsmittels ein die disperse Phase enthaltender Werkstoff hergestellt werden, dessen Polymerzusammensetzung im wesentlichen unverändert ist gegenüber dem ursprünglich als äußere Phase eingesetztem polymeren Werkstoff. Im wesentlichen unverändert bedeutet, daß im Zuge der Überführung des ursprünglichen Werkstoffs in die äußere Phase (thermisch oder durch Lösungsmittelzusatz) und dem nach dem Einmischen der dispersen Phase erfolgenden Wiedererstarren zu einem erfindungsgemäßen Werkstoff (durch Abkühlen oder Abziehen des Lösungsmittels) keine geziele weitere Polymerisation erfolgt, sondern allenfalls im geringfügigen Umfang Polymerreaktionen als Nebenreaktionen auftreten. Beispiel 21 im experimentellen Teil ist ein Beispiel für diese Variante der Erfindung.

Die disperse Phase enthält amorphes Siliciumdioxid. Vorzugsweise besteht sie im wesentlichen aus amorphen Siliciumdioxiden. Als Verfahren zur Messung der amorphen Siliciumdioxidteilchen kommt die Neutronenkleinwinkelstreuung (SANS small angle neutron scattering) zur Anwendung. Dieses Meßverfahren ist dem Fachmann geläufig und bedarf hier keiner näheren Erläuterung. Bei der SANS-Messung enthält man eine Teilchengrößeverteilungskurve, bei der der Volumenanteil von Teilchen mit entsprechender Größe (Durchmesser) aufgetragen ist über dem Teilchendurchmesser. Als mittlere Teilchengröße im Sinne der Erfindung wird definiert der Peak einer solchen SANS-Verteilungskurve, also die größte Volumenfraktion mit Teilchen entsprechenden Durchmessers.

Die Halbwertsbreite der Verteilungskurve ist die Breite (in nm) der Verteilungskurve auf halber Höhe, also bei der Hälfte des Teilchenvolumenanteils bei dem Verteilungskurvenpeak dₘₐₓ, oder, anders ausgedrückt, die Breite der Verteilungskurve auf halber Höhe der Y-Achse (relativ zur Höhe der Kurve bei dₘₐₓ).

Die mittlere Teilchengröße liegt bevorzugt zwischen 6 und 40 nm, weiter vorzugsweise zwischen 8 und 30 nm, besonders bevorzugt zwischen 10 und 25 nm. Siliciumdioxiddispersionen gemäß der Erfindung lassen sich gut verarbeiten und zeigen auch bei höherer Konzentration der dispersen Phase eine Rheologie, die dem idealen Newtonschen Fließverhalten angenähert ist. Bei der gegebenen Teilchenkonzentration haben sie in der Regel eine niedrigere Viskosität als entsprechende Dispersionen des Standes der Technik.

Die Halbwertsbreite der Verteilungskurve liegt erfindungsgemäß bevorzugt bei maximal 1,2·dₘₐₓ, weiter vorzugsweise beträgt sie maximal dₘₐₓ, besonders bevorzugt beträgt sie maximal 0,75·dₘₐₓ.

Der Anteil der äußeren Phase an der Dispersion kann im Rahmen der Erfindung zwischen 20 und 90 Gew.-%, vorzugsweise 30 bis 80 Gew.-%, weiter vorzugsweise 40 bis 70 Gew.-% liegen. Dementsprechend kann der Anteil der dispersen Phase zwischen 10 und 80 Gew.-%, vorzugsweise 20 bis 70 Gew.-%, weiter vorzugsweise 30 bis 60 Gew.-% liegen. Die Siliciumdioxidteilchen der erfindungsgemäßen Dispersion sind vorzugsweise im wesentlichen kugelförmig. Die Dispersion kann zusätzlich Hilfsstoffe enthalten ausgewählt aus der Gruppe bestehend aus Lösungsmitteln, Weichmachern, Vernetzungsmitteln, Katalysatoren, Stabilisatoren, Dispergiermitteln, Härtungsmitteln, Reaktionsvermittlern und Mitteln zur Beeinflussung der Fließfähigkeit der Dispersion enthält.

Besonders bevorzugt ist die erfindungsgemäße Dispersion wasserfrei, sie enthält also nur noch geringe Spuren Wasser, die auch nach Durchführung üblicher unten noch näher beschriebener Verfahren zur Entfernung von Wasser verbleiben.

Die äußere Phase kann einer von zwei oder mehreren Reaktionsbestandteilen zur Herstellung eines Polymers sein. Bei den Polymeren kann es sich um thermoplastische oder duroplastische Kunststoffe handeln. Beispielhaft erwähnt seien Polyurethane, Polyharnstoffe, Epoxidharze, Polyesterharze, Polysiloxane (Silikone) sowie allgemein Reaktionsharze zur Herstellung duroplastischer Kunststoffe. Sie kann bspw. einen Stoff enthalten ausgewählt aus der Gruppe bestehend aus Polyolen, Polyaminen, linearen oder verzweigten Polyglykolethern, Polyestern und Polylactonen.

Als monomere Polyole können für den erfindungsgemäßen Zweck eine Vielzahl bekannter Verbindungen eingesetzt werden. Wegen der leichten Verfügbarkeit und der Vorteile, insbesondere der ausgezeichneten Verträglichkeit und guten Verarbeitbarkeit der resultierenden Produkte, werden für die äußere Phase der erfindungsgemäßen Dispersion als Polyole lineare oder verzweigte aliphatische Glykole bevorzugt eingesetzt, wobei die äußere Phase der SiO₂-Dispersion besonders bevorzugt Ethylenglykol, 1,2- oder 1,3-Propandiol, 1,2- oder 1,4-Butandiol, 1,6-Hexandiol, 2,2,4-Trimethylpentandiol-1,3 und/oder Neopentylglykol aufweist.

Weiterhin werden als aliphatische Polyole vorzugsweise Glycerin, Trimethylolpropan sowie Zuckeralkohole, besonders Erythrit, Xylit, Mannit und/oder Sorbit, eingesetzt. Ferner kann die äußere Phase als bevorzugte Polyole ein oder mehrere alicyclische Polyole, insbesondere 1,4-Cyclohexandimethanol, und/oder Saccharose aufweisen.

Als polymere Polyole kommen für die äußere Phase vorzugsweise solche mit einem mittleren Molekulargewicht von 200 bis 20 000 in Frage, wobei das polymere Polyol vorzugsweise ein solches auf der Basis von (Polymeth)Acrylsäurealkylenglykolestern ist. Die äußere Phase der erfindungsgemäßen Dispersion kann ferner vorzugsweise polymere Polyole aufweisen, die durch Verseifung oder partielle Verseifung von vinylesterhaltigen Polymeren erhalten werden.

Als Polyether kommen für die äußere Phase vor allem die durch ringöffnende Polymerisation cyclischer Ether in Anwesenheit von Polyolen, z.B. den vorstehend genannten Polyolen, erhältlichen linearen oder verzweigten Polyglykolether in Betracht, von denen wegen ihrer relativ leichten Verfügbarkeit Polyethylenglykol, Polypropylenglykol und/oder Polytetramethylenglykol oder deren Copolymere bevorzugt sind.

Als Polyester kommen für die äußere Phase der erfindungsgemäßen Dispersion solche auf der Basis von Polyolen und aliphatischen, cycloaliphatischen oder aromatischen multifunktionellen Carbonsäuren (bspw. Dicarbonsäuren) in Betracht, und zwar alle entsprechenden, bei Temperaturen von 18 bis 300°C, vorzugsweise 18 bis 150°C, flüssigen gesättigten Polyester, vorzugsweise Bernsteinsäureester, Glutarsäureester, Adipinsäureester, Citronensäureester, Phthalsäureester, Isophthalsäureester, Terephthalsäureester und/oder die Ester der entsprechenden Hydrierungsprodukte, wobei die Alkoholkomponente aus monomeren oder polymeren Polyolen besteht, beispielsweise aus solchen der vorstehend genannten Art.

Weitere erfindungsgemäß verwendbare Polyester sind aliphatische Polylactone, bevorzugt ε-Polycaprolacton, und/oder Polycarbonate, die z.B. durch Polykondensation von Diolen mit Phosgen zugänglich sind. Vorzugsweise werden für die äußere Phase Polykohlensäureester des Bisphenols A mit einem mittleren Molekulargewicht von 500 bis 100 000 eingesetzt.

Anstelle der vorstehend genannten Polyole, Polyether und gesättigten Polyester können für den erfindungsgemäßen Zweck auch Mischungen der vorgenannten Stoffklassen für die äußere Phase der erfindungsgemäßen Dispersion eingesetzt werden. Die Verwendung solcher Mischungen kann z. B im Hinblick auf eine Verringerung der Glas- bzw. Schmelztemperatur der resultierenden Produkte von Vorteil sein. Die vorgenannten Polyether und Polyester können zum Zwecke der weiteren Umsetzung funktionelle Gruppen tragen, wie z. B. Hydroxyl-, Carboxyl-, Amino- oder Isocyanatogruppen.

Zum Zwecke der Beeinflussung der Viskosität der äußeren Phase, insbesondere der Viskositätserniedrigung oder der Verflüssigung, können den erfindungsgemäß für die äußere Phase vorgesehenen Polyolen, Polyethern und gesättigten Polyestern bzw. deren Mischungen gegebenenfalls noch geeignete Hilfsstoffe, insbesondere Lösungsmittel, Weichmacher, Verdünner und dergleichen, zugesetzt werden.

Die äußere Phase kann im Rahmen der Erfindung wenigstens ein Reaktionsharz enthalten.

Im Sinne der vorliegenden Erfindung werden unter Reaktionsharzen Vorprodukte oder Prepolymere verstanden, die vor und während des Verarbeitungs- bzw. Formgebungsprozesses flüssig bzw. plastisch sind und nach der normalerweise formgebenden Verarbeitung durch Polyreaktion (Polykondensation, Polyaddition) duroplastische Kunststoffe ergeben. Durch die Polyreaktion erhält man ein dreidimensional vernetztes, hartes, nicht schmelzbares Harz, den Duroplasten, der sich damit grundlegend von thermoplastischen Kunststoffen unterscheidet, die bekanntlich durch erneutes Erhitzen immer wieder verflüssigt bzw. plastifiziert werden können.

Infolge der meist sehr hohen Vernetzungsdichte weisen die vernetzten Reaktionsharze eine Reihe wertvoller Eigenschaften auf, die der Grund dafür sind, daß die neben den Thermoplasten zu den am meisten verwendeten Polymeren gehören. Zu diesen wertvollen Eigenschaften zählen insbesondere Härte, Festigkeit, Chemikalienresistenz und Temperaturbeständigkeit. Aufgrund dieser Eigenschaften werden diese Reaktionsharze auf den verschiedensten Gebieten angewendet, bspw. für die Herstellung von faserverstärkten Kunststoffen, für Isolierstoffe in der Elektrotechnik, zur Herstellung von Konstruktionsklebstoffen, Schichtpreßstoffen, Einbrennlacken und dergleichen.

Als Reaktionsharze sind erfindungsgemäß alle polymeren oder oligomeren organischen Verbindungen geeignet, die mit einer für eine Härtungsreaktion ausreichenden Zahl geeigneter reaktiver Gruppen versehen sind. Dabei ist es für den erfindungsgemäßen Zweck unerheblich, welcher Vernetzungs- oder Härtungsmechanismus im konkreten Fall abläuft. Daher sind als Ausgangsprodukte für die Herstellung der erfindungsgemäß modifizierten Reaktionsharze allgemein alle Reaktionsharze geeignet, die sich zu Duroplasten verarbeiten lassen, unabhängig vom jeweiligen Vernetzungsmechanismus, der bei der Härtung des jeweiligen Reaktionsharzes abläuft. Nicht Gegenstand der Erfindung sind Reaktionsharze mit radikalisch polymerisierbaren Doppelbindungen, die aufgrund ihrer besonderen Reaktionsfähigkeit für das erfindungsgemäße Verfahren weniger gut geeignet sind. Sie können allenfalls als fakultativer zusätzlicher Bestandteil in der äußeren Phase enthalten sein.

Grundsätzlich lassen sich die erfindungsgemäß als Ausgangsprodukte verwendbaren Reaktionsharze entsprechend der Art der Vernetzung durch Addition oder Kondensation in zwei Gruppen einteilen.

Aus der ersten Gruppe der durch Polyaddition vernetzten Reaktionsharze werden bevorzugt ein oder mehrere Epoxidharze, Urethanharze und/oder lufttrocknende Alkydharze als Ausgangsmaterial ausgewählt. Epoxid- und Urethanharze werden in der Regel durch Zusatz stöchiometrischer Mengen eines Hydroxyl-, Amino-, Carboxyl- oder Carbonsäureanhydridgruppen-enthaltenden Härters vernetzt, wobei die Härtungsreaktion durch Addition der Oxiran- bzw. Isocyanatgruppen des Harzes an die entsprechenden Gruppen des Härters erfolgt. Bei Epoxidharzen ist auch die sogenannte katalytische Härtung durch Polyaddition der Oxirangruppen selbst möglich. Lufttrocknende Alkydharze vernetzen durch Autooxidation mit Luftsauerstoff.

Beispiele für die zweite Gruppe der durch Polykondensation vernetzten Reaktionsharze sind Kondensationsprodukte von Aldehyden, z. B. Formaldehyd, mit amingruppenhaltigen aliphatischen oder aromatischen Verbindungen, z. B. Harnstoff oder Melamin, oder mit aromatischen Verbindungen wie Phenol, Resorcin, Kresol, Xylol usw., ferner Furanharze, gesättigte Polyesterharze und Silikonharze. Die Härtung erfolgt hierbei meist durch Temperaturerhöhung unter Abspaltung von Wasser, niedermolekularen Alkoholen oder anderen niedermolekularen Verbindungen. Bevorzugt werden als Ausgangsmaterial für die erfindungsgemäß modifizierten Reaktionsharze ein oder mehrere Phenol-Harze, Resorcin-Harze und/oder Kresol-Harze, und zwar sowohl Resole als auch Novolake, ferner Harnstoff-Formaldehyd- und Melamin-Formaldehyd-Vorkondensate, Furanharze sowie gesättigte Polyesterharze und/oder Silikonharze ausgewählt.

Nicht nur die vorstehend genannten Reaktionsharze, sondern auch alle anderen, die zur Herstellung von duroplastischen Kunststoffen geeignet sind, lassen sich in der erfindungsgemäß vorgeschlagenen Weise modifizieren und ergeben nach der Vernetzung und Härtung Duroplaste mit erheblich verbesserter Bruch- und Schlagzähigkeit, wobei andere wesentliche, für die Duroplasten charakteristische Eigenschaften, wie Festigkeit, Wärmeformbeständigkeit und Chemikalienresistenz, im wesentlichen unbeeinflußt erhalten bleiben. Hierbei sind die erfindungsgemäß eingesetzten Reaktionsharze oder Reaktionsharzgemische bei Temperaturen im Bereich von 18 bis 100°C flüssig. Ferner weisen die eingesetzten Reaktionsharze oder Reaktionsharzgemische ein mittleres Molekulargewicht im Bereich von 200 bis 500.000, vorzugsweise von 300 bis 20.000 auf. Weiter können als äußere Phase erfindungsgemäß auch Monomere und Oligomere eingesetzt werden. Hierzu zählen insbesondere solche monomeren oder oligomeren Verbindungen, die sich durch Polyaddition oder Polykondensation zu Polymeren umsetzen lassen.

Die Erfindung besitzt insbesondere bei der Anwendung im Rahmen von Reaktionsharzen erhebliche Vorteile. Reaktionsharze des Standes der Technik sind infolge des hochvernetzten Zustandes spröde und haben eine geringe Schlagzähigkeit, insbesondere bei niedrigeren Temperaturen. Die Bruch- und Schlagzähigkeit solcher duroplastischen Kunststoff kann erfindungsgemäß erheblich verbessert werden, ohne daß Härte, Festigkeit und Erweichungstemperatur nachteilig beeinflußt werden. Erfindungsgemäß können somit Reaktionsharze und daraus duroplastische Kunststoffe hergestellt werden, bei denen einerseits das flüssige Reaktionsharz trotz eines hohen Anteils Füllstoffes noch gut verarbeitbar ist und andererseits durch den Füllzusatz monomodaler Teilchen geringen Durchmessers eine erhebliche Verbesserung der mechanischen Eigenschaften (insbesondere Zugfestigkeit, Bruchdehnung oder Bruchzähigkeit) des ausgehärteten duroplastischen Kunststoffes eintritt.

Bei einer bevorzugten Ausführungsform der Erfindung enthalten die polymerisierbaren Monomere, Oligomere und/oder Prepolymere Kohlenstoff-, Sauerstoff-, Stickstoff- und/oder Schwefelatome in der Hauptkette. Es handelt sich also um organische Kohlenwasserstoffpolymere (ggf. mit Heteroatomen), Polysiloxane fallen nicht unter diese bevorzugte Ausführungsform.

Vorzugsweise kann die äußere fließfähige Phase polymerisierbare Monomere ohne radikalisch polymerisierbare Doppelbindungen sowie Reaktionsharze enthalten.

Die äußere fließfähige Phase enthält Silane. Die Silane können hydrolysierbare und nicht hydrolysierbare, ggf. funktionelle Gruppen aufweisen. Beispiele für hydrolysierbare Gruppen sind Halogen-, Alkoxy-, Alkenoxy-, Acyloxy-, Oximino- und Aminoxygruppen. Beispiele für funktionelle, nicht hydrolysierbare Gruppen sind Vinyl-, Aminopropyl-, Chlorpropyl-, Aminoethylaminopropyl-, Glycidyloxypropyl-, Mercaptopropyl- oder Methacryloxypropyl-Gruppen. Beispiele für nicht hydrolysierbare, nicht funktionelle Gruppen sind einwertige C₁- bis C₈-Kohlenwasserstoffreste. Beispiele für erfindungsgemäß verwendbare Silane sind: γ-Aminopropyltrimethoxysilan, γ-Aminopropylmethyldiethoxysilan, γ-Aminopropyldimethylmethoxysilan, Glycidyloxypropyltrimethoxysilan, Glycidyloxypropyldimethylmethoxysilan, Methacryloxypropyltrimethoxysilan, Chlorpropyltrimethoxysilan, Vinylmethyldimethoxysilan, Vinyltrispropenoxysilan, Vinyldimethylbutanonoximsilan, Vinyltrisbutanonoximsilan, Trimethylchlorsilan, Vinyldimethylchlorsilan, Dimethylchlorsilan, Vinylmethylchlorsilan.

Die Silane werden bevorzugt in einer Konzentration von 40 bis 200 Mol-% und besonders bevorzugt von 60 bis 150 Mol-% bezogen auf die molare Menge Silanolgruppen auf der Oberfläche eingesetzt.

Bei der Durchführung des erfindungsgemäßen Verfahrens wird zunächst eine wäßrige Silicatlösung vorgelegt. Es kann sich um eine Alkalisilicatlösung, insbesondere eine Natrium- und oder Kaliumsilicatlösung handeln. Die Konzentration dieser wäßrigen Silicatlösung liegt vorzugsweise im Bereich zwischen 20 und 50 Gew.-%. Das bevorzugte Verhältnis von SiO₂ zu Na₂O liegt zwischen 2 und 3.

Im nächsten Schritt wird das Silikat bis zu einer Teilchengröße von 3 bis 50 nm polykondensiert. Dies kann bspw. geschehen durch Behandeln der Alkalisilicatlösung mit sauren Ionenaustauschern, die die Alkaliionen gegen H⁺-Ionen austauschen und damit die gewünschte Polykondensation auslösen.

Das erhaltene Kieselsäuresol wird auf einen alkalischen pH-Wert (pH > 8, bevorzugt > 9, weiter bevorzugt > 10, besonders bevorzugt zwischen 10 und 12) eingestellt und auf diese Weise gegen weitere Polykondensation oder Agglomeration bereits vorhandener Teilchen stabilisiert.

Optional kann das Sol eingeengt werden, bspw. durch Destillieren, vorzugsweise auf eine SiO₂-Konzentration von 30 bis 40 Gew.-%.

In nächsten Schritt wird das Sol mit Bestandteilen der äußeren, fließfähigen Phase der Dispersion vermischt. Die Bestandteile der äußeren, fließfähigen Phase können dabei entweder gleichzeitig oder in mehreren Teilschritten nacheinander zugegeben bzw. eingemischt werden.

Anschließend werden besonders bevorzugt Wasser und/oder andere Lösungsmittelbestandteile aus der Dispersion entfernt, da aus den erfindungsgemäßen Dispersionen besonders bevorzugt wasserfreie Kunststoffe (sogenannte wasserfreie Nanokomposite) hergestellt werden sollen. Es können sämtliche übliche, dem Fachmann geläufige, Trennverfahren angewendet werden wie bspw. Destillation, vorzugsweise im Vakuum, Membrantrennung, ggf. Sedimentation, Lösungsmittelextraktion, Verwendung eines Molekularsiebs etc. Bei der Destillation können ggf. Lösungsmittel zugesetzt werden, die mit Wasser ein Azeotrop bilden und so als azeotropes Schleppmittel wirken. Wenn verschiedene Lösungsmittelbestandteile zu entfernen sind, kann auch dies gleichzeitig oder durch mehrere sequentielle Teilschritte durchgeführt werden.

Im Rahmen der Erfindung ist es auch möglich, Teilschritte der Verfahrensschritte e) und f) des Anspruchs 16 sozusagen miteinander zu mischen. Es ist also möglich, nach der Zugabe von einem oder mehrerer Bestandteile im Rahmen des Schrittes e) zunächst einen oder mehrere Lösungsmittelbestandteile im Rahmen des Schrittes f) zu entfernen und anschließend weitere Teilschritte (Stoffzugabe) im Rahmen des Schrittes e) durchzuführen, wieder andere Lösungsmittelbestandteile im Rahmen des Schrittes f) zu entfernen usw. Somit können Teilschritte der Verfahrensschritte e) und f) des Anspruchs 16 miteinander und untereinander gemischt und vertauscht werden.

Bevorzugt ist es, wenn der Siliciumdioxidanteil einer erfindungsgemäßen Dispersion ausschließlich und damit in seiner Gesamtheit nach dem genannten Verfahren hergestellt wird. Im Rahmen der Erfindung ist es jedoch auch möglich, einen Teil des Siliciumdioxids der Dispersion nach Verfahren des Standes der Technik herzustellen, so lange dabei die disperse Phase insgesamt die Kriterien des Anspruchs 1 erfüllt. Insbesondere kann im Rahmen der Erfindung ein Teil der dispersen Phase durch das in der Beschreibungseinleitung geschilderte Verfahren der Hydrolyse und Kondensation von organofunktionellen Silanen (insbesondere Alkoxysilanen) hergestellt werden. Es kann sich um Mono-, Di-, Tri- oder Tetraalkoxysilane handeln, wobei ein genügender Anteil Silane mit drei oder vier hydrolysierbaren Gruppen vorhanden sein muß. Bevorzugt sind insbesondere Mono-, Di- oder Trimethoxy- oder -ethoxysilane, bei denen einer der nicht hydrolysierbaren Reste ein aliphatischer (bevorzugt mit 1 bis 18 C-Atomen) oder aromatischer Kohlenwasserstoffrest ist, der zusätzlich eine funktionelle Gruppe aufweisen kann, bspw. eine Vinyl-, Allyl-, (Meth)-acryl-, Glycidyl-, Halogen-, Hydroxyl- oder Mercaptogruppe. Ggf. vorhandene weitere nicht hydrolysierbare Reste sind bevorzugt Methyl oder Ethyl.

Sofern ein Teil der dispersen Phase auf die genannte Weise durch Silanhydrolysierung hergestellt wird, können ggf. zusätzliche Lösungsmittel zugesetzt werden, die als Lösungsvermittler zwischen Silan und äußerer Phase der Dispersion dienen können. Geeignet sind bspw. wassermischbare niedermolekulare Alkohole (bevorzugt C₁- bis C₄-Alkohole), Ketone, Amine, Amide oder heterocyclische Verbindungen wie bspw. THF oder Pyridin.

Gegenstand der Erfindung ist ferner die Verwendung einer oben definierten Dispersion zur Herstellung eines polymeren Werkstoffs. Der polymere Werkstoff kann ein thermoplastischer oder duroplastischer Kunststoff sein. Beispielhaft seien genannt Polyurethane, Polyharnstoffe, Epoxidharze, Polyesterharze, Polysiloxane sowie sämtlich duroplastischen, aus Reaktionsharzen herstellbaren Kunststoffe.

Der polymere Werkstoff kann einerseits ein thermoplastischer Kunststoff oder andererseits ein chemisch vernetzter, duroplastischer oder elastomerer Kunststoff sein. Beispielhaft für duroplastische und/oder elastomere Kunststoffe seien genannt: Polyurethane, Polyharnstoffe, Epoxidharze, Polyesterharze, Polyimidharze, Polysiloxane, Alkydharze, Styrol-Butadien-Kautschuk, Acrylnitril-Butadien-Kautschuk, Polybutadien-Kautschuk.

Als Beispiele für erfindungsgemäß in der äußeren Phase verwendbare thermoplastische Polymere können genannt werden: Polyolefine, Polystyrol, Styrol-Acrylnitril-Copolymere, Polyamide, Polyvinylchlorid und seine Copolymeren, Polyvinylalkohole, und -acetate und -ether sowie Copolymere dieser Stoffe, Polycarbonat, Polymethylacrylate und Polymethylmethacrylate einschließlich ihrer Copolymeren, Polyurethane, Polysulfone, Polyetherketone, Polyester.

Die polymeren werkstoffe im Sinne dieser Erfindung sind nicht nur kompakte Werkstoffe, sondern vielmehr können die erfindungsgemäßen Dispersionen auch vorteilhaft als Teil des Bindemittels in Farben, Lacken und Beschichtungen eingesetzt werden. Besonders vorteilhaft wirkt sich bei diesen Anwendungen aus, daß durch den Gehalt an Siliciumdioxid einerseits die Abrieb- und Kratzfestigkeit sowie die Sperrwirkung gegen die Penetration der Beschichtung durch Gase und Feuchtigkeit erhöht werden, andererseits aber durch die enge Teilchengrößenverteilung die Viskosität erheblich geringer erhöht wird als bei Siliciumdioxid-Füllstoffen nach dem herkömmlichen Stand der Technik. Dies ist gerade bei Oberflächenbeschichtungen ein erheblicher Vorteil.

Des weiteren können die erfindungsgemäß modifizierten polymeren Werkstoffe auch geschlossenzellige oder offenzellige Schaumstoffe sein, z. B. auf Basis von Polyurethanen, Polysiloxanen, Polyolefinen oder Polystyrol. Der besondere Vorteil der erfindungsgemäßen Dispersionen ergibt sich dabei aus der Tatsache, daß aufgrund der geringen Teilchengröße und der engen Größenverteilung die Teilchen in den dünnen Lamellen des Schaumstoffes zugegen sein können, ohne die Schaumstruktur als solche zu stören. Dadurch wird es bspw. ermöglicht, die Härte und die Stauchfestigkeit des Schaumstoffes bei gleichbleibender Schaumdichte zu erhöhen oder trotz abnehmender Dichte zu erhalten.

Eine weitere Ausführungsform der erfindungsgemäß modifizierten polymeren Werkstoffe sind flüssige, härtbare Verguß- und Imprägniermassen z. B. für die Herstellung von Elektroisolierharzen oder Faserverbundwerkstoffen. Bei vielen Anwendungen von Elektroisolierharzen, z. B. beim Verguß von Spulen oder Transformatoren, kommt es darauf an, daß das Imprägnierharz möglichst leicht und fehlerfrei durch die oft nur wenige µm großen Abstände der Spulenwicklungen fließen kann, was bei mit Füllstoffen nach dem Stand der Technik gefüllten Harzen wegen deren Teilchengröße und unregelmäßigen Verteilung kaum möglich ist. Im Prinzip das gleiche gilt für die Anwendung von Imprägnierharzen in Faserverbundwerkstoffen, wo insbesondere bei hochbeanspruchten Teilen die einzelnen Verstärkungsfasern so dicht gepackt sind, daß nach dem Stand der Technik keinerlei gefüllte Systeme verwendet werden können. In beiden Anwendungen können die mit den erfindungsgemäßen Dispersionen zubereiteten Imprägnierharze aufgrund der extrem geringen Teilchengröße und der engen Durchmesserverteilung des Siliciumdioxids mühelos in die Zwischenräume der Wicklungen bzw. Fasern eindringen. Damit können sich die vorteilhaften mechanischen und thermischen Eigenschaften des siliciumdioxidgefüllten Harzes im gesamten Bauteil entfalten.

Eine weitere vorteilhafte Eigenschaft der mit den erfindungsgemäßen Dispersionen modifizierten polymeren Werkstoffe ist deren optische Klarheit, die sich wiederum aus der extrem geringen Teilchengröße und der engen Durchmesserverteilung des Siliciumdioxids ergibt. Insbesondere bei Kunststoffen, die von Natur aus optisch klar sind, gibt es nach dem Stand der Technik keine Möglichkeit, mehr als nur einen sehr geringen Anteil von anorganischen Füllstoffen dem Polymer hinzuzufügen, ohne daß dessen optische Eigenschaften in Mitleidenschaft gezogen werden. Es besteht somit bei Kunststoffanwendungen, bei denen es auf optische Klarheit ankommt, kaum eine Möglichkeit, Eigenschaften wie Härte bzw. Elastizitätsmodul, Kratzfestigkeit, Bruchfestigkeit, thermische Leitfähigkeit, Ausdehnungskoeffizient, Diffusionssperrwirkung usw. zu verbessern, was man üblicherweise bei nicht transparenten Systemen durch Zusatz anorganischer Füllstoffe bewerkstelligen würde. Grundsätzlich betrifft dies sehr viele polymere Werkstoffe und deren Anwendungen, z. B. Polymethylmethacrylat, Polycarbonat, Polyalkylenterephthalate, diverse Klarlacksysteme z. B. für Decklackierungen von Fahrzeugen, Möbeln, Fußböden, Drucksachen usw.

Bspw. kann die erfindungsgemäße Dispersion Polyole oder Polyamine der oben näher beschriebenen Art enthalten, aus denen sich Polyurethane bzw. Polyharnstoffe herstellen lassen. Die Dispersion wird dann in bekannter Weise mit Polyisocyanaten vermischt und zur Reaktion gebracht, um die gewünschten polymeren Werkstoffe herzustellen, deren Eigenschaften durch die disperse SiO₂-Phase entsprechend modifiziert sind. Die Polymerisationsreaktion kann in dem Fachmann geläufiger Weise ein- oder mehrstufig, ggf. bei erhöhter Temperatur ausgeführt werden.

Enthält die erfindungsgemäße Dispersion ein Reaktionsharz, kann dies in bekannter Weise nach den bekannten ein- oder mehrstufigen Verfahren der Reaktionsharztechnik zu einem vorzugsweise duroplastischen Kunststoff weiterverarbeitet werden. Vorzugsweise unter Zusatz von Katalysatoren, Härtern oder Vernetzern findet die Ausbildung eines dreidimensionalen polymeren Netzwerkes statt. Weitere Additive und Zuschlagsstoffe können dem Reaktionsharz vor der Vernetzung zugefügt werden, bspw. organische oder anorganische Füllstoffe, Fasern, Pigmente, Fließhilfsmittel, Reaktionsbeschleuniger oder -verzögerer, Weichmacher oder dergleichen.

Nachfolgend werden Ausführungsbeispiele der Erfindung erläutert. Alle %-Angaben in den Beispielen sind Gew.-%, die Angabe "Teile" bezieht sich auf Massenteile. Die Größenverteilung der SiO₂-Teilchen (auch Durchmesserverteilung genannt) wird in den Beispielen als x ± y nm angegebenen. X ist dabei der Peak dₘₐₓ der Verteilungskurve, y die halbe Halbwertsbreite der Verteilungskurve. Dementsprechend beträgt die Halbwertsbreite der Verteilungskurve 2y.

### Beispiel 1

Eine handelsübliche wäßrige Alkalisilicatlösung mit einem Wassergehalt von 47 % und einem Verhältnis von SiO₂ zu Na₂O von 2,4 wurde mit demineralisiertem Wasser auf einen Wassergehalt von 97 % verdünnt. 100 Teile dieser verdünnten Lösung wurden mit einer Rate von 20 Teilen pro Stunde durch eine mit einem handelsüblichen sauren Ionenaustauscher gefüllten Säule geleitet und danach einer Destillationsvorlage zugeführt, in der die zulaufende deionisierte Silicatlösung bei Siedetemperatur gehalten wurde und das abdestillierende Wasser aus der Lösung entfernt wurde. Nach dem Ende des Zulaufes wurde das gebildete Kieselsäuresol durch weiteres Erhitzen auf 10 Teile eingeengt. Der pH-Wert wurde auf 10,5 bis 11 eingestellt.

### Beispiele 2 bis 4

Jeweils 100 Teile des in Beispiel 1 hergestellten Sols wurden mit 2000 Teilen Isopropanol vermischt und das Wasser durch atmosphärische Destillation bis auf einen nach der Karl-Fischer-Methode bestimmten Gehalt von kleiner als 0,1 % entfernt. Danach wurden jeweils 80 Teile der nachfolgenden Polyether unter Rühren zugegeben:
- Beispiel 2:: Polypropylendiol ( PPG), Molmasse (MM) 1000
- Beispiel 3:: Mit 15 % Polyethylenglykol (PEG) endgecapptes PPG, MM 4000
- Beispiel 4:: Polypropylentriol, MM 6000

Anschließend wurden die flüchtigen Bestandteile destillativ bei 50 °C und einem Vakuum von bis zu 85 mbar entfernt.

Die drei erhaltenen Proben waren wasserklar. Die Teilchengrößenverteilung wurde mittels SANS gemessen und ergab an allen drei Proben eine im Rahmen der Messgenauigkeit übereinstimmende Durchmesserverteilung von 47 ± 11 nm.

### Beispiel 5

Beispiel 1 wurde wiederholt mit der Abweichung, daß der Wassergehalt der verdünnten Alkalisilicatlösung auf 98 % eingestellt wurde sowie die Zulaufgeschwindigkeit zur Destillationsvorlage 15 Teile pro Stunde betrug. Nach dem Einengen wurden 9 Teile Kieselsäuresol erhalten. Der pH-Wert wurde auf 10,5 bis 11 eingestellt.

### Beispiele 6 bis 10

Jeweils 100 Teile des in Beispiel 5 hergestellten Sols wurden mit 2,5 Teilen Trimethylmethoxysilan versetzt und gerührt. Zu diesen Mischungen wurden 2000 Teile Isopropanol gegeben und das Wasser durch atmosphärische Destillation bis auf einen nach der Karl-Fischer-Methode bestimmten Gehalt von kleiner als 0,1 % entfernt. Danach wurden jeweils 80 Teile der nachfolgenden Polyether unter Rühren zugegeben:
- Beispiel 6:: PPG, MM 12000
- Beispiel 7:: PPG mit 10 % Ethylenoxid statistisch copolymerisiert, MM 3000
- Beispiel 8:: Polypropylentriol, MM 550
- Beispiel 9:: Mit 20 % PEG endgecapptes Polypropylentriol, MM 2000
- Beispiel 10:: Polytetramethylenglykol, MM 650

Anschließend wurden die flüchtigen Bestandteile destillativ bei 50 °C und einem Vakuum von bis zu 85 mbar entfernt.

Die fünf erhaltenen Proben waren wasserklar. Die Teilchengrößenverteilung wurde mittels SANS gemessen und ergab an allen Proben eine im Rahmen der Meßgenauigkeit übereinstimmende Durchmesserverteilung von 30 ± 7 nm.

### Beispiel 11

Beispiel 1 wurde wiederholt mit der Abweichung, daß die Zulaufgeschwindigkeit zur Destillationsvorlage 30 Teile pro Stunde betrug. Nach dem Einengen wurden 15 Teile Kieselsäuresol erhalten. Der pH-Wert wurde auf 10,5 bis 11 eingestellt.

### Beispiel 12

100 Teile des in Beispiel 11 hergestellten Sols wurden unter Rühren mit 3,9 Teilen n-Propyltrimethoxysilan versetzt und eingerührt. Danach wurde diese Mischung in 620 Teile Isopropanol gerührt und bei 40°C und 85 mbar auf 113 Teile eingeengt. Anschließend wurden 110 Teile eines hydroxylgruppenhaltigen Polyacrylats ('Desmophen A 870 BA', Fa. Bayer AG) zugegeben. Die leicht flüchtigen Bestandteile wurden anschlißeend bei 40°C und 58 mbar destillativ so schonend entfernt, daß das im Polyacrylat enthaltene höhersiedende Butylacetat in der Dispersion verblieb. Man erhielt eine wasserklare Dispersion mit einer durch SANS ermittelten Durchmesserverteilung von 8 ± 2,5 nm.

### Beispiel 13

100 Teile des in Beispiel 11 hergestellten Sols wurden mit 5,9 Teilen γ-Glycidoxypropyldiethoxymethylsilan unter Rühren versetzt und anschließend in eine Lösung aus 60 Teilen eines cycloaliphatischen Epoxidharzes ('ERL 4221', Fa. Union Carbide) in 620 Teilen Isopropanol gegeben. Die flüchtigen Bestandteile wurden anschließend bei 50 °C und 85 mbar destillativ entfernt. Man erhielt eine wasserklare Dispersion mit einer durch SANS ermittelten Durchmesserverteilung von 8 ± 2,5 nm.

### Beispiel 14

100 Teile des in Beispiel 11 hergestellten Sols wurden unter Rühren mit 588 Teilen Isopropanol versetzt. Anschließend wurde bei 40 °C und 85 mbar auf 147 Teile eingeengt. Danach wurden 5,7 Teile γ-Glycidoxypropyltrimethoxysilan unter Rühren zugegeben und anschließend in eine Lösung aus 60 Teilen eines cycloaliphatischen Epoxidharzes ('ERL 4221', Fa. Union Carbide) in 168 Teilen Isopropanol gegeben. Die flüchtigen Bestandteile wurden anschließend bei 50 °C und 3 mbar destillativ entfernt. Man erhielt eine wasserklare Dispersion mit einer durch SANS ermittelten Durchmesserverteilung von 8 ± 2 nm.

### Beispiel 15

Beispiel 1 wurde wiederholt mit der Abweichung, daß die Zulaufgeschwindigkeit zur Destillationsvorlage 43 Teile pro Stunde betrug. Nach dem Einengen wurden 8 Teile Kieselsäuresol erhalten. Der pH-Wert wurde auf 10,5 bis 11 eingestellt.

### Beispiel 16

100 Teile des in Beispiel 15 hergestellten Sols wurden mit 5,6 Teilen Trimethoxyphenylsilan versetzt und gerührt. Danach wurde diese Mischung in 610 Teile Isopropanol eingerührt und bei 40 °C und 85 mbar auf 118 Teile eingeengt. Anschließend wurden 225 Teile Isopropylacetat zugegeben und die Mischung wieder destillativ bei 40 °C und 85 mbar auf 134 Teile eingeengt. Diese Mischung wurde nunmehr in 125 Teile einer 50%igen Lösung von Bisphenol-A-Epoxidharz ('Epilox A 17-01', Fa. Leuna Harze GmbH) in Isopropylacetat gegeben und anschließend die flüchtigen Bestandteile bei 50 °C und 3 mbar destillativ entfernt. Man erhielt eine leicht opake Dispersion mit einer durch SANS ermittelten Durchmesserverteilung von 16 ± 5 nm.

### Beispiel 17

100 Teile des in Beispiel 15 hergestellten Sols wurden mit 2,8 Teilen Methoxytrimethylsilan versetzt und gerührt. Danach wurde diese Mischung in 820 Teile Isopropanol eingerührt und bei 40 °C und 85 mbar auf 118 Teile eingeengt. Danach wurde diese Mischung mit 423 Teilen einer 15 %igen Lösung von Bisphenol-F-Epoxidharz ('Epilox F 16-01', Fa. Leuna Harze GmbH) in Isopropylacetat verrührt und anschließend die flüchtigen Bestandteile bei 50 °C und 3 mbar destillativ entfernt. Man erhielt eine leicht opake Dispersion mit einer durch SANS ermittelten Durchmesserverteilung von 17 ± 5 nm.

### Beispiel 18

Jeweils 100 Teile des in Beispiel 15 hergestellten Sols wurden mit 5,3 Teilen Phenyltrimethoxysilan versetzt und gerührt. Zu diesen Mischungen wurden 1000 Teile Isopropanol gegeben und danach bei 40°C und 85 mbar auf jeweils 120 Teile eingeengt. Anschließend wurden je 220 Teile Isopropylacetat zugegeben und die Mischungen wieder destillativ bei 40°C und 85 mbar auf 120 Teile eingeengt. Danach wurden jeweils 135 Teile einer 50%igen Isopropylacetat-Lösung der nachfolgenden Polyesterpolyole zugegeben:
- Beispiel a:: Verzweigtes Polyesterpolyol ('Desmophen 1100', Fa. Bayer AG)
- Beispiel b:: Polycarbonat-Polyesterpolyol ('Desmophen C 200, Fa. Bayer AG)
- Beispiel c:: Polycaprolactonpolyol ('TONE 2241', Fa. DOW Chemical)

Anschließend wurden die flüchtigen Bestandteile destillativ bei 50°C und einem Vakuum von bis zu 85 mbar entfernt. Die drei erhaltenen Proben waren wasserklar. Die Teilchengrößenverteilung wurde mittels SANS gemessen und ergab an allen drei Proben eine im Rahmen der Meßgenauigkeit übereinstimmende Durchmesserverteilung von 17 ± 5 nm.

### Beispiel 19

100 Teile des in Beispiel 15 hergestellten Sols wurden mit 4,5 Teilen n-Propyltrimethoxysilan versetzt und gerührt. Danach wurde diese Mischung in eine Lösung von 80 Teilen ε-Caprolactam in 520 Teilen n-Propanol eingerührt. Die flüchtigen Bestandteile wurden anschließend destillativ bei 60°C und einem Vakuum von bis zu 85 mbar entfernt. Man erhielt eine wasserklare Dispersion, die bei Raumtemperatur zu einem farblosen Feststoff erstarrt. Durch Aufschmelzen bei 70°C erhält man abermals eine wasserklare Dispersion mit einer durch SANS ermittelten Durchmesserverteilung von 16 ± 7 nm.

### Beispiel 20

100 Teile des in Beispiel 15 hergestellten Sols wurden unter Rühren mit 4,5 Teilen Propyltrimethoxysilan unter Rühren versetzt und anschließend in eine Lösung aus 38 Teilen eines Weichmachers auf Adipatbasis ('Plasticiser 109', Fa. hanse chemie GmbH) in 522 Teilen Isopropanol gegeben. Die flüchtigen Bestandteile wurden bei 50°C un 3 mbar destillativ entfernt. Man erhielt eine gelbe, wasserklare Dispersion mit einer durch SANS ermittelten Durchmesserverteilung von 18 ± 5 nm.

### Beispiel 21

100 Teile des in Beispiel 15 hergestellten Sols wurden mit 5,8 Teilen Phenyltrimethoxysilan versetzt und gerührt. Zu dieser Mischung wurden 1000 Teile Isopropanol gegeben und danach bei 40°C und 85 mbar auf 122 Teile eingeengt. Anschließend wurden 225 Teile Isopropylacetat zugegeben und die Mischung wieder destillativ bei 40°C und 85 mbar auf 110 Teile eingeengt. 100 Teile PMMA-Formmassen-Granulat ('Plexiglas 6N', Fa. Röhm GmbH) wurden in einem Zweischneckenentgasungsextruder ('ZSK 25', Fa. Werner & Pfleiderer) aufgeschmolzen. Unter einem Druck von 42 bar wurden 100 Teile des oben hergestellten Isopropylacetat-Sols seitlich zudosiert, homogen vermischt und anschließend die flüchtigen Bestandteile in einem zweistufigen Entgasungsprozeß abgeblasen und unter Vakuum entgast. Durch einen nachgeschlateten Granulator erhielt man ein wasserklares farbloses Granulat mit einer durch SANS ermittelten Durchmesserverteilung von 17 ± 7 nm.

Aus diesem Granulat wurden mittels einer handelsüblichen Spritzgießmaschine Probekörper hergestellt, deren mechanische und thermische Kennwerte ermittelt und mit unmodifiziertem 'Plexiglas 6N' verglichen wurden. Es ergaben sich folgende Werte:

| Kennwert | Einheit | Norm | Meßwert | |
|---|---|---|---|---|
| | | | unmodifiziert | modifiziert |
| Zug-E-Modul | MPa | ISO 527 | 3.200 | 4.900 |
| Bruchspannung | MPa | ISO 527 | 67 | 103 |
| Bruchdehnung | % | ISO 527 | 3 | 3 |
| Erweichungstemperatur | °C | ISO 306 | 96 | 115 |
| Längenausdehnungskoeffizient | 10⁻⁶K⁻¹ | ASTM E 831 | 80 | 60 |
| Optischer Transmissionsgrad | % | DIN 5036 | 92 | 90 |

Das Beispiel demonstriert die erheblich verbesserten mechanischen und thermischen Kennwerte des Plexiglases, ohne daß dessen optische Eigenschaften merklich unter dem Zusatz des Siliciumdioxides gelitten haben.

### Beispiel 22

100 Teile des in Beispiel 15 hergestellten Sols wurden unter Rühren mit 588 Teilen Isopropanol versetzt. Anschließend wurde bei 40°C und 85 mbar auf 147 Teile eingeengt. Danach wurden 5,7 Teile γ-Glycidoxypropyltrimethoxysilan unter Rühren zugegeben und anschließend in eine Lösung aus 60 Teilen eines cycloaliphatischen Epoxidharzes ("ERL 4221", Fa. Union Carbide) in 168 Teilen Isopropanol gegeben. Die flüchtigen Bestandteile wurden anschließend bei 50°C und 2 mbar destillativ entfernt. Man erhielt eine wasserklare Dispersion mit einer durch SANS ermittelten Durchmesserverteilung von 15 ± 4 nm.

### Beispiel 23

In diesem Beispiel werden die rheologischen Eigenschaften von Harzen und Polyetherpolyolen, die einerseits mit pyrogener Kieselsäure des Standes der Technik und andererseits mit erfindungsgemäßen SiO₂-Dispersionen gefüllt sind, verglichen. AEROSIL® R8200 ist eine durch Flammenhydrolyse aus Siliciumtetrachlorid hergestellte pyrogene Kieselsäure, erhältlich von der Fa. Degussa.

**Tabelle 1:**

| **Viskositäten SiO**_{**2**}**-gefüllter Harze und Polyether- polyole** | | | |
|---|---|---|---|
| Harz/Polyetherpolyol (Hersteller) | SiO₂-Gehalt [%] | Art der SiO₂-Partikel | η (25°C) [mPa·s] |
| ERL 4221 (Union Carbide) | 0 | - | 381 |
| ERL 4221 (Union Carbide) | 23 | Bsp. 22 | 422 |
| ERL 4221 (Union Carbide) | 40 | Bsp. 22 | 25810 |
| ERL 4221 (Union Carbide) | 5 | AEROSIL® R8200 | 491 |
| ERL 4221 (Union Carbide) | 23 | AEROSIL® R8200 | pastös |
| Baycoll BT 1380 (Bayer) | 0 | - | 595 |
| Baycoll BT 1380 (Bayer) | 20 | Bsp. 8 | 1030 |
| Baycoll BT 1380 (Bayer) | 50 | Bsp. 8 | 19800 |
| Baycoll BT 1380 (Bayer) | 5 | AEROSIL® R8200 | 815 |
| Baycoll BT 1380 (Bayer) | 10 | AEROSIL® R8200 | 1487 |
| Baycoll BT 1380 (Bayer) | 20 | AEROSIL® R8200 | pastös |
| BisGMA/TEDMA | 0 | - | 1194 |
| BisGMA/TEDMA | 16 | Bsp. 12 | 2001 |
| BisGMA/TEDMA | 45 | Bsp. 12 | 42900 |
| BisGMA/TEDMA | 5 | AEROSIL® R8200 | 1864 |
| BisGMA/TEDMA | 10 | AEROSIL® R8200 | 3899 |
| BisGMA/TEDMA | 20 | AEROSIL® R8200 | pastös |

Man erkennt, daß sich erfindungsgemäß hohe SiO₂-Gehalte realisieren lassen, ohne daß die Viskosität übermäßig ansteigt und damit die Verarbeitbarkeit erschwert bzw. unmöglich macht. Dagegen führt ein AEROSIL-Gehalt von etwa 20 Gew.-% regelmäßig bereits zu einer pastösen Konsistenz des Harzes bzw. Polyetherpolyols.

### Beispiel 24

Der vorteilhafte Einfluß erfindungsgemäßer SiO₂-Dispersionen auf die mechanischen Eigenschaften von Polymeren wird am Beispiel von Epoxidharzen erläutert. In diesem Beispiel wird das Epoxidharz ERL 4221 mit der SiO₂-Dispersion des Beispiels 22 auf die in Tab. 2 angegebenen SiO₂-Gehalte vermischt. Für die UV-Härtung (c bis e) wurden die Proben mit 1% UV-Initiator ("CYRACURE® UVI-6974", der Fa. Union Carbide) versetzt, in Aluminium-Schalen gegeben und bei 60°C und 1 mbar 15 Minuten lang entgast. Anschließend wurden die Proben 10 Minuten mit einer UV-Lampe (UVASPOT 400 H, der Fa. Dr. K. Hönle GmbH) im Abstand von 20 cm bestrahlt und 1 Stunde bei 160°C getempert. Für die thermische Härtung (a und b) wurde das Epoxyäquivalentgewicht nach der Norm DIN 16 945 bestimmt und 1 Äquivalent eines cycloaliphatischen Anhydrides ("ALBIDUR HE 600", Fa. hanse chemie GmbH) zugegeben. Die Proben werden in Aluminium-Schalen gegeben und bei 60°C und 1 mbar 15 Minuten lang entgast. Die Härtung erfolgt in 4 Stufen: 90 Minuten bei 90°C, 120 Minuten bei 120°C, 120 Minuten bei 140°C und 60 Minuten bei 160°C.

Für die nachfolgenden bruchmechanischen Untersuchungen zur Bestimmung der Bruchzähigkeit K_{IC}, der Bruchenergie G_{IC} und des E-Moduls E wurden aus dem kompakten Material CT-Normprüfkörper mit einer Kantenlänge von 33 mm gefräst, die nach der Norm ASTM E 399-83 unter quasistatischer Belastung geprüft wurden. Biegeprüfungen wurden in Dreipunktbiegeversuchen entsprechend der Norm DIN 53 452 durchgeführt.

**Tabelle 2:**

| **Ergebnisse der bruchmechanischen Untersuchung** | | | | | |
|---|---|---|---|---|---|
| | SiO₂-Gehalt [%] | Härtung | K_{IC} [MPa·m^{1/2}] | G_{IC} [J/m²] | E [MPa] |
| a | 0 | HE600 | 0,47±0,05 | 77,2±22,0 | 3053±276 |
| b | 23 | HE600 | 0,78±0,02 | 147,7±7,9 | 4146±122 |
| c | 0 | UV | 0,28±0,05 | 26,2±8,4 | 3156±81 |
| d | 23 | UV | 0,43±0,04 | 47,0±6,1 | 3893±191 |
| e | 40 | UV | 0,51±0,04 | 45,7±7,6 | 5795±276 |

Die Versuchsergebnisse zeigen, daß sich mittels der erfindungsgemäßen SiO₂-Dispersion Bruchzähigkeit, Bruchenergie und E-Modul des polymeren Werkstoffes wesentlich verbessern lassen.

## Patentansprüche

1. Siliciumdioxid-Dispersion, die enthält:
a) eine äußere fließfähige Phase, die enthält:
a1) polymerisierbare Monomere, Oligomere und/oder Prepolymere, die durch nicht-radikalische Umsetzungen in Polymere überführbar sind; und/oder
a2) Polymere,
b) eine disperse Phase, die amorphes Siliciumdioxid enthält,
**dadurch gekennzeichnet, daß** die mittels Neutronenkleinwinkelstreuung (SANS) gemessene mittlere Teilchengröße dₘₐₓ des Siliciumdioxids zwischen 3 und 50 nm bei einer maximalen Halbwertsbreite der Verteilungskurve von 1,5 dₘₐₓ liegt, und daß die Dispersion Silane enthält.

2. Dispersion nach Anspruch 1, **dadurch gekennzeichnet, daß** die mittlere Teilchengröße zwischen 6 und 40 nm, vorzugsweise 8 und 30 nm, weiter vorzugsweise 10 und 25 nm liegt.

3. Dispersion nach Anspruch 1 oder 2, **dadurch gekennzeichnet, daß** die Halbwertsbreite der Verteilungskurve maximal 1,2 dₘₐₓ, vorzugsweise maximal dₘₐₓ, weiter vorzugsweise maximal 0,75 dₘₐₓ beträgt.

4. Dispersion nach einem der Ansprüche 1 bis 3, **dadurch gekennzeichnet, daß** der Anteil der äußeren Phase an der Dispersion 20-90 Gew.-%, vorzugsweise 30-80 Gew.-%, weiter vorzugsweise 40-70 Gew.-% beträgt.

5. Dispersion nach einem der Ansprüche 1 bis 4, **dadurch gekennzeichnet, daß** der Anteil der dispersen Phase an der Dispersion 10-80 Gew.-%, vorzugsweise 20-70 Gew.-%, weiter vorzugsweise 30-60 Gew.-% beträgt.

6. Dispersion nach einem der Ansprüche 1 bis 5, **dadurch gekennzeichnet, daß** die Siliciumdioxidteilchen im wesentlichen kugelförmig sind.

7. Dispersion nach einem der Ansprüche 1 bis 6, **dadurch gekennzeichnet, daß** sie zusätzlich Hilfsstoffe ausgewählt aus der Gruppe bestehend aus Lösungsmitteln, Weichmachern, Vernetzungsmitteln, Katalysatoren, Stabilisatoren, Dispergiermitteln, Härtungsmitteln, Reaktionsvermittlern und Mitteln zur Beeinflussung der Fließfähigkeit der Dispersion enthält.

8. Dispersion nach einem der Ansprüche 1 bis 7, **dadurch gekennzeichnet, daß** sie wasserfrei ist.

9. Dispersion nach einem der Ansprüche 1 bis 8, **dadurch gekennzeichnet, daß** die äußere Phase wenigstens einen Stoff ausgewählt aus der Gruppe bestehend aus Polyolen, Polyaminen, linearen oder verzweigten Polyglykolethern, Polyestern und Polylactonen.

10. Dispersion nach einem der Ansprüche 1 bis 8, **dadurch gekennzeichnet, daß** die äußere Phase wenigstens ein Reaktionsharz enthält.

11. Dispersion nach einem der Ansprüche 1 bis 10, **dadurch gekennzeichnet, daß** die polymerisierbaren Monomere, Oligomere und/oder Prepolymere C-, O-, N- und/oder S-Atome in der Hauptkette enthalten.

12. Dispersion nach einem der Ansprüch 1 bis 11, **dadurch gekennzeichnet, daß** die äußere fließfähige Phase polymerisierbare Monomere ohne radikalisch polymerisierbare Doppelbindungen und/oder Reaktionsharze enthält.

13. Dispersion nach einem der Ansprüche 1 bis 12, **dadurch gekennzeichnet, daß** die Silane in einer Menge von 60-150 Mol.-% bezogen auf die molare Menge der Silanolgruppen auf der Oberfläche der Siliciumdioxidteilchen der amorphen Phase enthalten sind.

14. Verfahren zur Herstellung einer Dispersion nach einem der Ansprüche 1 bis 13, **gekennzeichnet durch** folgende Schritte:
a) Vorlegen einer wäßrigen Silicatlösung,
b) Polykondensation des Silicats bis zu einer Teilchengröße von 3-50 nm,
c) Einstellen des erhaltenen Kieselsäuresols auf einen alkalischen pH-Wert,
d) optional Einengen des Sols,
e) Vermischen des Sols mit Bestandteilen der äußeren, fließfähigen Phase der Dispersion,
f) optional Entfernen von Wasser und/oder anderen Lösungsmittelbestandteilen aus der Dispersion.

15. Verfahren nach Anspruch 14, **dadurch gekennzeichnet, daß** die wäßrige Silicatlösung eine Alkalisilicatlösung, insbesondere eine Natrium- und/oder Kaliumsilicatlösung ist.

16. Verfahren nach Anspruch 15, **dadurch gekennzeichnet, daß** die Konzentration der wäßrigen Silicatlösung 20-50 Gew.-% beträgt.

17. Verfahren nach einem der Ansprüche 14 bis 16, **dadurch gekennzeichnet, daß** das Kieselsäuresol in Schritt c) auf einen pH-Wert zwischen 10 und 12 eingestellt wird.

18. Verfahren nach einem der Ansprüche 14 bis 17, **dadurch gekennzeichnet, daß** das Kieselsäuresol in Schritt d) auf eine Konzentration von 30-40 Gew.-% eingeengt wird.

19. Verfahren nach einem der Ansprüche 14 bis 18, **dadurch gekennzeichnet, daß** in Schritt f) Wasser entfernt wird mittels eines Verfahrens ausgewählt aus der Gruppe bestehend aus Destillation, Membrantrennung, Extraktion und Verwendung eines Molekularsiebs.

20. Verwendung einer Dispersion nach einem der Ansprüche 1 bis 13 zur Herstellung eines polymeren Werkstoffs.

21. Verwendung nach Anspruch 20, **dadurch gekennzeichnet, daß** der Werkstoff ausgewählt ist aus der Gruppe bestehend aus Polyurethanen, Polyharnstoffen, Epoxidharzen, Polyesterharzen und Polysiloxanen.

22. Verwendung nach Anspruch 20 oder 21, **dadurch gekennzeichnet, daß** der Werkstoff ein duroplastischer Kunststoff ist.

23. Verwendung nach Anspruch 20 oder 21, **dadurch gekennzeichnet, daß** der Werkstoff ein thermoplastischer Kunststoff ist.

24. Verwendung nach Anspruch 20 oder 21, **dadurch gekennzeichnet, daß** der Werkstoff eine polymere Beschichtung, ein Lack, eine Farbe, oder ein Schaumstoff ist.

25. Polymerer Werkstoff, **dadurch gekennzeichnet, daß** er aus einer Dispersion nach einem der Ansprüche 1 bis 13 hergestellt ist.

## Claims

1. A silicon dioxide dispersion comprising
a) an external fluid phase comprising
a1) polymerizable monomers, oligomers and/or prepolymers convertible to polymers by nonradical reactions; and/or
a2) polymers,
b) a disperse phase comprising amorphous silicon dioxide,
**characterized in that** the average particle size dₘₐₓ of the silicon dioxide as measured by means of small-angle neutron scattering (SANS) is between 3 and 50 nm at a maximum half-width of the distribution curve of 1.5 dₘₐₓ and that the dispersion comprises silan.

2. The dispersion of claim 1, **characterized in that** the average particle size is between 6 and 40 nm, preferably 8 and 30 nm, more preferably 10 and 25 nm.

3. The dispersion of claim 1 or 2, **characterized in that** the half-width of the distribution curve is not more than 1.2 dₘₐₓ, preferably not more than dₘₐₓ, more preferably not more than 0.75 dₘₐₓ.

4. The dispersion of one of claims 1 to 3, **characterized in that** the fraction of the external phase as a proportion of the dispersion is 20-90% by weight, preferably 30-80% by weight, more preferably 40-70% by weight.

5. The dispersion of one of claims 1 to 4, **characterized in that** the fraction of the disperse phase as a proportion of the dispersion is 10-80% by weight, preferably 20-70% by weight, more preferably 30-60% by weight.

6. The dispersion of one of claims 1 to 5, **characterized in that** the silicon dioxide particles are substantially spherical.

7. The dispersion of one of claims 1 to 6, **characterized in that** it further comprises auxiliaries selected from the group consisting of solvents, plasticizers, crosslinkers, catalysts, stabilizers, dispersants, curing agents, reaction mediators and agents for influencing the fluidity of the dispersion.

8. The dispersion of one of claims 1 to 7, **characterized in that** it is water-free.

9. The dispersion of one of claims 1 to 8, **characterized in that** the external phase comprises at least one substance selected from the group consisting of polyols, polyamines, linear or branched polyglycol ethers, polyesters and polylactones.

10. The dispersion of one of claims 1 to 8, **characterized in that** the external phase comprises at least one reactive resin.

11. The dispersion of one of claims 1 to 10, **characterized in that** the polymerizable monomers, oligomers and/or prepolymers contain C, O, N and/or S atoms in the main chain.

12. The dispersion of one of claims 1 to 11, **characterized in that** the external fluid phase comprises polymerizable monomers without radically polymerizable double bonds and/or reactive resins.

13. The dispersion of one of claims 1 to 12, **characterized in that** the silanes are present in an amount of 60-150 mol% based on the molar amount of the silanol groups on the surface of the silicon dioxide particles of the amorphous phase.

14. A process for preparing a dispersion of one of claims 1 to 13, **characterized by** the following steps:
a) introducing an aqueous silicate solution,
b) polycondensing the silicate to a particle size of 3-50 nm,
c) adjusting the resulting silica sol to an alkaline pH,
d) optionally concentrating the sol,
e) mixing the sol with constituents of the external fluid phase of the dispersion,
f) optionally removing water and/or other solvent constituents from the dispersion.

15. The process of claim 14, **characterized in that** the aqueous silicate solution is an alkali metal silicate solution, in particular a sodium silicate and/or potassium silicate solution.

16. The process of claim 15, **characterized in that** the concentration of the aqueous silicate solution is 20-50% by weight.

17. The process of one of claims 14 to 16, **characterized in that** the silica sol in step c) is adjusted to a pH of between 10 and 12.

18. The process of one of claims 14 to 17, **characterized in that** the silica sol in step d) is concentrated to a concentration of 30-40% by weight.

19. The process of one of claims 14 to 18, **characterized in that** in step f) water is removed by means of a process selected from the group consisting of distillation, membrane separation, extraction and use of a molecular sieve.

20. The use of a dispersion of one of claims 1 to 13 for producing a polymeric material.

21. The use of claim 20, **characterized in that** the material is selected from the group consisting of polyurethanes, polyureas, epoxy resins, polyester resins and polysiloxanes.

22. The use of claim 20 or 21, **characterized in that** the material is a thermoset.

23. The use of claim 20 or 21, **characterized in that** the material is a thermoplastic.

24. The use of claim 20 or 21, **characterized in that** the material is a polymeric coating, a paint, an ink or a foam.

25. A polymeric material, **characterized in that** it has been produced from a dispersion of one of claims 1 to 13.

## Revendications

1. Dispersion de dioxyde de silicium, qui contient :
a) une phase externe fluide, qui contient :
a1) des monomères, oligomères et/ou prépolymères polymérisables, qui peuvent être transformés en polymères par une réaction non radicalaire ; et/ou
a2) des polymères,
b) une phase dispersée qui contient du dioxyde de silicium amorphe,
**caractérisée en ce que**
la taille moyenne des particules dₘₐₓ du dioxyde de silicium, mesurée par dispersion angulaire neutronique (SANS), est comprise entre 3 et 50 nm pour une largeur maximale à mi-hauteur de la courbe de distribution à 1,5 dₘₐₓ,
et **en ce que** la dispersion contient des silanes.

2. Dispersion selon la revendication 1, **caractérisée en ce que**
la taille moyenne des particules est comprise entre 6 et 40 nm, de préférence entre 8 et 30 nm, plus préférablement encore entre 10 et 25 nm.

3. Dispersion selon la revendication 1 ou 2, **caractérisée en ce que**
la largeur à mi-hauteur de la courbe de distribution est au maximum de 1,2 dₘₐₓ, de préférence au maximum dₘₐₓ, plus préférablement encore au maximum 0,75 dₘₐₓ.

4. Dispersion selon l'une des revendications 1 à 3, **caractérisée en ce que**
la part de la phase externe est de 20-90 % en poids dans la dispersion, de préférence de 30-80 % en poids, plus préférablement encore de 40-90 % en poids.

5. Dispersion selon l'une des revendications 1 à 4, **caractérisée en ce que**
la part de la phase dispersée est de 10-80 % en poids dans la dispersion, de préférence de 20-70 % en poids, plus préférablement encore de 30-60 % en poids.

6. Dispersion selon l'une des revendications 1 à 5, **caractérisée en ce que**
les particules de dioxyde de silicium ont essentiellement une forme sphérique.

7. Dispersion selon l'une des revendications 1 à 6, **caractérisée en ce qu'**elle contient en outre des adjuvants additionnels choisis dans le groupe composé des solvants, plastifiants, agents de réticulation, catalyseurs, stabilisants, agents de dispersion, agents de durcissement, agents intermédiaires de réaction et d'agents influant sur la fluidité de la dispersion.

8. Dispersion selon l'une des revendications 1 à 7, **caractérisée en ce qu'**elle est anhydre.

9. Dispersion selon l'une des revendications 1 à 8, **caractérisée en ce que**
la phase externe contient au moins une substance choisie dans le groupe composé des polyols, polyamines, polyglycoléthers linéaires ou ramifiées, polyesters et polylactones.

10. Dispersion selon l'une des revendications 1 à 8, **caractérisée en ce que**
la phase externe contient au moins une résine réactionnelle.

11. Dispersion selon l'une des revendications 1 à 10, **caractérisée en ce que**
les monomères, oligomères et/ou prépolymères polymérisables contiennent des atomes C, O, N et/ou S dans la chaîne principale.

12. Dispersion selon l'une des revendications 1 à 11, **caractérisée en ce que**
la phase externe fluide contient des monomères polymérisables sans doubles liaisons polymérisables par voie radicalaire et/ou des résines réactionnelles.

13. Dispersion selon l'une des revendications 1 à 12, **caractérisée en ce que**
les silanes sont contenus dans une quantité comprise entre 60 et 150 % en mol par rapport à la quantité molaire des groupes silanol sur la surface des particules de dioxyde de silicium de la phase amorphe.

14. Procédé de fabrication d'une dispersion selon l'une des revendications 1 à 13, **caractérisé par** les étapes suivantes :
a) préparation d'une solution aqueuse de silicate,
b) polycondensation du silicate jusqu'à obtention d'une taille de particules de 3-50 nm,
c) ajustement du sol d'acide silicique obtenu à une valeur de pH alcalin,
d) concentration optionnelle du sol par évaporation,
e) mélange du sol avec les composants de la phase externe fluide de la dispersion,
f) enlèvement optionnel de l'eau et/ou d'autres agents solvants de la dispersion.

15. Procédé selon la revendication 14, **caractérisé en ce que**
la solution aqueuse de silicate est une solution de silicate alcalin, en particulier une solution de silicate de sodium et/ou de potassium.

16. Procédé selon la revendication 15, **caractérisé en ce que**
la concentration de la solution aqueuse de silicate est de 20-50 % en poids.

17. Procédé selon l'une des revendications 14 à 16, **caractérisé en ce que**
le sol d'acide silicique est ajusté à l'étape c) à une valeur de pH comprise entre 10 et 12.

18. Procédé selon l'une des revendications 14 à 17, **caractérisé en ce que**
le sol d'acide silicique est concentré à l'étape d) à une concentration de 30-40 % en poids.

19. Procédé selon l'une des revendications 14 à 18, **caractérisé en ce que**
à l'étape f), l'eau est enlevée au moyen d'un procédé choisi dans le groupe comprenant la distillation, la séparation par membranes, l'extraction et l'utilisation d'un tamis moléculaire.

20. Utilisation d'une dispersion selon l'une des revendications 1 à 13 pour fabriquer un matériau polymère.

21. Utilisation selon la revendication 20, **caractérisée en ce que**
le matériau est choisi dans le groupe composé des polyuréthannes, polyurées, résines époxy, résines polyester et polysiloxanes.

22. Utilisation selon la revendication 20 ou 21, **caractérisée en ce que**
le matériau est une matière plastique thermodurcissable.

23. Utilisation selon la revendication 20 ou 21, **caractérisée en ce que**
le matériau est une matière plastique thermoplastique.

24. Utilisation selon la revendication 20 ou 21, **caractérisée en ce que**
le matériau est un revêtement polymère, une laque, une couleur, ou une mousse.

25. Matériau polymère, **caractérisé en ce qu'**il est fabriqué à partir d'une dispersion selon l'une des revendications 1 à 13.
